(19) Europäisches Patentamt / European Patent Office / Office européen des brevets

(11) **EP 3 952 305 A1**

(12) **EUROPEAN PATENT APPLICATION**
published in accordance with Art. 153(4) EPC

(43) Date of publication:
**09.02.2022 Bulletin 2022/06**

(21) Application number: **20785392.0**

(22) Date of filing: **17.03.2020**

(51) International Patent Classification (IPC):
*H04N 13/125* (2018.01)     *G02B 30/26* (2020.01)
*H04N 13/351* (2018.01)     *H04N 13/363* (2018.01)

(52) Cooperative Patent Classification (CPC):
**G02B 30/26; H04N 13/125; H04N 13/351; H04N 13/363**

(86) International application number:
**PCT/JP2020/011584**

(87) International publication number:
**WO 2020/203237 (08.10.2020 Gazette 2020/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2019 JP 2019068493**

(71) Applicant: **Sony Group Corporation**
**Tokyo 108-0075 (JP)**

(72) Inventors:
• **SUZUKI, Takaaki**
  **Tokyo 108-0075 (JP)**
• **TAKAHASHI, Noriaki**
  **Tokyo 108-0075 (JP)**

(74) Representative: **D Young & Co LLP**
**120 Holborn**
**London EC1N 2DY (GB)**

(54) **IMAGE PROCESSING DEVICE, IMAGE PROCESSING METHOD, AND PROGRAM**

(57)     The present disclosure relates to an image processing apparatus, an image processing method, and a program that are capable of correcting a three-dimensional image viewable with naked eyes with high accuracy by integrally and simultaneously correcting deterioration due to mixing of images between a plurality of projectors and optical deterioration due to a lens MTF.

A multi-viewpoint image projected by a projection unit is generated by integrally and simultaneously applying correction to optical deterioration and correction to crosstalk deterioration. The present disclosure can be applied to a three-dimensional image display device.

*FIG. 1*

EP 3 952 305 A1

**Description**

TECHNICAL FIELD

The present disclosure relates to an image processing apparatus, an image processing method, and a program, and particularly relates to an image processing apparatus, an image processing method, and a program that are capable of correcting a three-dimensional image viewable with naked eyes with high accuracy.

BACKGROUND ART

A viewing system that uses a projector array and allows a viewer to view a three-dimensional image with naked eyes realizes the viewing of the three-dimensional image with naked eyes by projecting a plurality of images of different viewpoints in a unit of a pixel column for each projector, and further diffusing the projected images of each viewpoint at a predetermined diffusion angle in a horizontal direction.

Incidentally, in the viewing system with naked eyes using a projector array, by increasing the number of projectors to be used, the number of projectable images can be increased, and thus it is possible to achieve high resolution of a three-dimensional image to be viewed.

However, on the other hand, when the number of projectors increases, a device configuration and a device cost increase.

Thus, it is conceivable to configure the viewing system with a small number of projectors without reducing resolution, and in a case of realizing viewing of a three-dimensional image with naked eyes with a small number of projectors, there arises a need to increase a diffusion angle of a diffusion plate required for the system.

However, when the diffusion angle of the diffusion plate is increased, images (multi-viewpoint images) are mixed between a plurality of projectors, and moreover, there is also optical deterioration due to a lens modulation transfer function (MTF) (imaging performance of a lens expressed by an MTF curve) of the projectors. Thus, blurring or crosstalk occurs in a three-dimensional image to be viewed.

Therefore, there has been proposed a signal processing technology for individually eliminating blurring and crosstalk by capturing an image of blurring or crosstalk by an imaging device such as a camera, and by applying, on the basis of a result of capturing the image, correction corresponding to the blurring or the crosstalk to an image to be projected in advance (see Patent Documents 1 to 3).

CITATION LIST

PATENT DOCUMENT

Patent Document 1: JP 2010-245844 A
Patent Document 2: JP 2013-219643 A
Patent Document 3: JP 2009-008974 A

SUMMARY OF THE INVENTION

PROBLEMS TO BE SOLVED BY THE INVENTION

However, in a case where technologies of Patent Documents 1 and 2 are applied, an inverse filter is designed to individually correct deterioration such as blurring and crosstalk at a time of projection. Thus, when an amount of blurring increases to some extent, the blurring cannot be appropriately corrected, and artifacts and uncorrected blurring may occur at the time of projection due to excessive correction.

Furthermore, in a case where a technology of Patent Document 3 is applied, it may take time to converge and obtain calculation results for obtaining an inverse filter coefficient, or the calculation results may not converge when the number of projectors increases.

As a result, even when the technologies of Patent Documents 1 to 3 are applied, there is a limit to amounts of blurring and crosstalk that can be corrected, and even when the technologies of Patent Documents 1 to 3 are used in combination, there is a limit to correction that can be appropriately applied.

The present disclosure has been made in view of such a situation, and particularly corrects a three-dimensional image viewable with naked eyes with high accuracy by integrally and simultaneously correcting deterioration due to mixing of images between a plurality of projectors and optical deterioration due to a lens MTF.

SOLUTIONS TO PROBLEMS

An image processing apparatus according to one aspect of the present disclosure includes: a projection unit that projects a multi-viewpoint image; and an image generation unit that generates the multi-viewpoint image by integrally and simultaneously applying correction to optical deterioration and correction to crosstalk deterioration.

An image processing method and a program according to one aspect of the present disclosure correspond to the image processing apparatus according to one aspect of the present disclosure.

In one aspect of the present disclosure, a multi-viewpoint image is projected, and the multi-viewpoint image is generated by integrally and simultaneously applying correction to optical deterioration and correction to crosstalk deterioration.

BRIEF DESCRIPTION OF DRAWINGS

Fig. 1 is a diagram illustrating a configuration example of an image processing unit of the present disclosure.

Fig. 2 is a diagram illustrating a principle of viewing a three-dimensional image with naked eyes.

Fig. 3 is a diagram illustrating a relationship between a coordinate position in a horizontal direction and a coordinate position in a viewing zone of an image projected by a projection unit.

Fig. 4 is a diagram illustrating the relationship between the coordinate position in the horizontal direction and the coordinate position in the viewing zone of the image projected by the projection unit.

Fig. 5 is a diagram illustrating the relationship between the coordinate position in the horizontal direction and the coordinate position in the viewing zone of the image projected by the projection unit.

Fig. 6 is a diagram illustrating the relationship between the coordinate position in the horizontal direction and the coordinate position in the viewing zone of the image projected by the projection unit.

Fig. 7 is a diagram illustrating the relationship between the coordinate position in the horizontal direction and the coordinate position in the viewing zone of the image projected by the projection unit.

Fig. 8 is a diagram illustrating the relationship between the coordinate position in the horizontal direction and the coordinate position in the viewing zone of the image projected by the projection unit.

Fig. 9 is a diagram illustrating the relationship between the coordinate position in the horizontal direction and the coordinate position in the viewing zone of the image projected by the projection unit.

Fig. 10 is a diagram illustrating the relationship between the coordinate position in the horizontal direction and the coordinate position in the viewing zone of the image projected by the projection unit.

Fig. 11 is a diagram illustrating the relationship between the coordinate position in the horizontal direction and the coordinate position in the viewing zone of the image projected by the projection unit.

Fig. 12 is a diagram illustrating the relationship between the coordinate position in the horizontal direction and the coordinate position in the viewing zone of the image projected by the projection unit.

Fig. 13 is a diagram illustrating the relationship between the coordinate position in the horizontal direction and the coordinate position in the viewing zone of the image projected by the projection unit.

Fig. 14 is a diagram illustrating the relationship between the coordinate position in the horizontal direction and the coordinate position in the viewing zone of the image projected by the projection unit.

Fig. 15 is a diagram illustrating an image viewed in a case where there is no diffusion plate.

Fig. 16 is a diagram illustrating an image viewed in a case where there is the diffusion plate.

Fig. 17 is a diagram illustrating the image viewed in the case where there is the diffusion plate.

Fig. 18 is a diagram illustrating blurring caused by crosstalk and blurring caused by a lens MTF in a three-dimensional image.

Fig. 19 is a diagram illustrating the blurring caused by the crosstalk and the blurring caused by the lens MTF in the three-dimensional image.

Fig. 20 is a diagram illustrating processing when the blurring caused by the crosstalk and the blurring caused by the lens MTF in the three-dimensional image are corrected independently from each other.

Fig. 21 is a diagram illustrating the processing when the blurring caused by the crosstalk and the blurring caused by the lens MTF in the three-dimensional image are corrected independently from each other.

Fig. 22 is a diagram illustrating processing when the blurring caused by the crosstalk and the blurring caused by the lens MTF in the three-dimensional image are integrally and collectively corrected.

Fig. 23 is a diagram illustrating display processing by the image processing unit in Fig. 1.

Fig. 24 is a diagram illustrating processing in a case where an error occurs in correction using inverse functions as Application Example 1.

Fig. 25 is a diagram illustrating the processing in the case where an error occurs in the correction using the inverse functions as Application Example 1.

Fig. 26 is a diagram illustrating display processing corresponding to an error that has occurred in correction using inverse functions by the image processing unit in Fig. 1.

Fig. 27 is a diagram illustrating an example of displaying different two-dimensional images according to viewpoint positions as multi-viewpoint images as Application Example 2.

Fig. 28 is a diagram illustrating the example of displaying the different two-dimensional images according to the viewpoint positions as the multi-viewpoint images as Application Example 2.

Fig. 29 is a diagram illustrating a configuration example of a general-purpose personal computer.

MODE FOR CARRYING OUT THE INVENTION

Hereinafter, preferred embodiments of the present disclosure will be described in detail with reference to the accompanying drawings. Note that, in the present specification and drawings, components having substantially the same functional configuration are denoted by the same reference signs, and redundant description thereof is omitted.

Hereinafter, a mode for carrying out the present technology will be described. The description will be made in the following order.

1. Preferred Embodiment
2. Application Example 1
3. Application Example 2
4. Example of Executing Processing by Software

<<1. Preferred Embodiment>>

The present disclosure makes it possible to achieve high resolution of a three-dimensional image by integrally and simultaneously correcting crosstalk deterioration due to mixing of images between a plurality of projectors and optical deterioration due to a lens MTF.

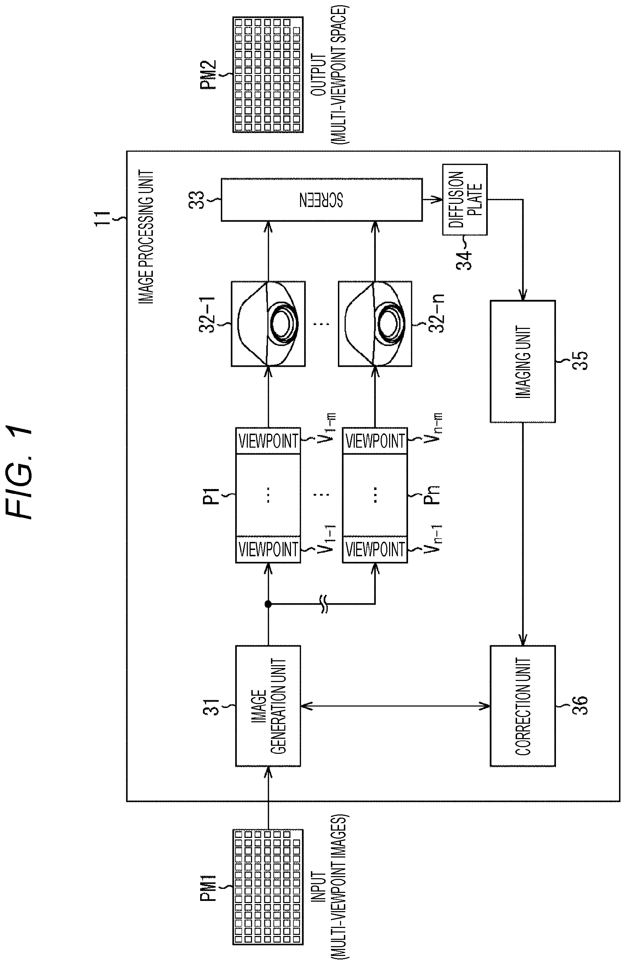

Fig. 1 illustrates a configuration example of an image processing unit to which the present disclosure is applied.

The image processing unit in Fig. 1 includes an image generation unit 31, projection units 32-1 to 32-n, a screen 33, a diffusion plate 34, an imaging unit 35, and a correction unit 36.

The image generation unit 31 generates viewpoint images P1 to Pn to be respectively projected by the projection units 32-1 to 32-n from (a group of) multi-viewpoint images PM1 serving as input.

Furthermore, the image generation unit 31 applies correction to the generated (group of) multi-viewpoint images PM1 by inverse functions (inverse filters) for correction supplied from the correction unit 36 such that (a group of) output images PM2 projected and reflected on the screen 33 including a mirror and diffused via the diffusion plate 34 to be viewed match the (group of) input images PM1.

Moreover, the image generation unit 31 outputs the multi-viewpoint images P1 to Pn corrected by the inverse functions (inverse filters) to the projection units 32-1 to 32-n, respectively.

The projection units 32-1 to 32-n include, for example, projectors, and respectively project the multi-viewpoint images P1 to Pn on the screen 33 as the (group of) output images PM2.

Note that, in a case where it is not particularly necessary to distinguish the projection units 32-1 to 32-n from each other and the multi-viewpoint images P1 to Pn from each other, the projection units 32-1 to 32-n and the multi-viewpoint images P1 to Pn are simply referred to as the projection units 32 and the multi-viewpoint images P, and other configurations are also referred to in a similar manner.

The diffusion plate 34 including an anisotropic diffusion plate is provided in the front stage of the screen 33 and diffuses images in a predetermined diffusion distribution in a unit of a pixel column of the multi-viewpoint images P1 to Pn, and the images are viewed by a viewer, so that viewing of a three-dimensional image with naked eyes is realized.

More specifically, each of the multi-viewpoint images P1 to Pn includes images of different viewpoints in a unit of one or a plurality of pixel columns, and when each of the plurality of multi-viewpoint images P1 to Pn is viewed by a viewer from a predetermined viewing direction, an image of a pixel column corresponding to each viewing direction is viewed. Thus, viewing of a three-dimensional image is realized.

In Fig. 1, it is expressed that the image P1 includes viewpoints V1-1 to V1-m in a unit of a pixel column, and the image Pn includes viewpoints Vn-1 to Vn-m in a unit of a pixel column.

The imaging unit 35 is provided at a position corresponding to a viewing position of a viewer, captures images to be viewed by the viewer, and outputs the captured images to the correction unit 36.

The correction unit 36 generates inverse functions (filters) for correcting the (group of) output images PM2, which are images captured by the imaging unit 35, to be the same as the (group of) input images PM1, and outputs the inverse functions (filters) to the image generation unit 31.

<Principle of Viewing Three-Dimensional Image>

Here, a principle of viewing a three-dimensional image will be described.

The projection units 32-1 to 32-n of the image processing unit 11 are arranged in a horizontal direction.

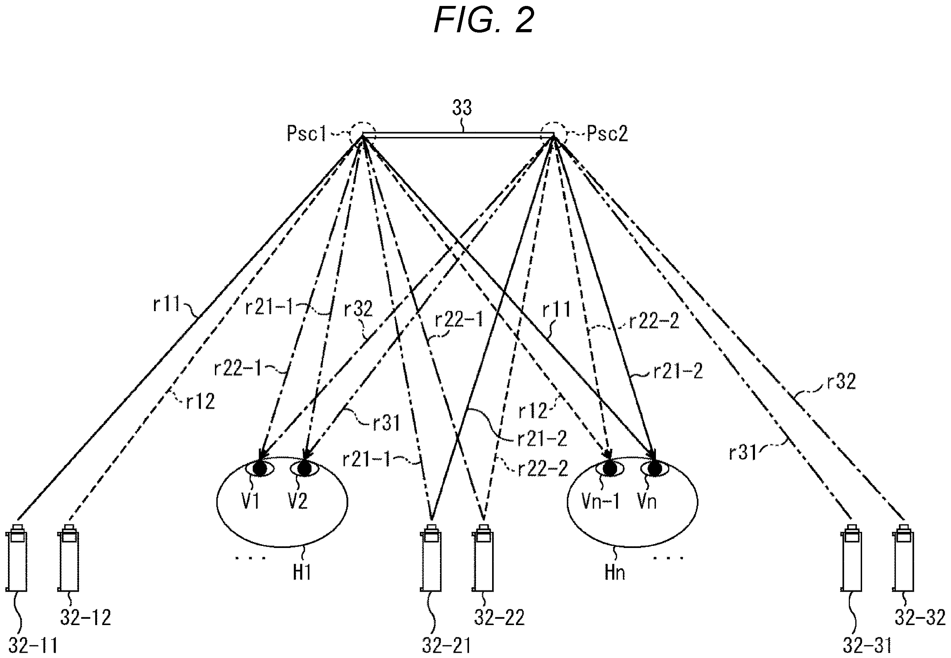

Here, in order to simplify the description, for example, as illustrated in Fig. 2, a case is considered where projection units 32-11, 32-12, 32-21, 32-22, 32-31, and 32-32 are arranged from the left in the drawing and project multi-viewpoint images on the screen 33, and viewers H1 and Hn view the images projected on the screen 33.

Each of the projection units 32 constitutes images of different viewpoints in a unit of one or a plurality of pixel columns in the horizontal direction, and projects the images on the screen 33 as a multi-viewpoint image.

Here, only optical paths of images at pixel positions (pixel columns) Psc1 and Psc2 at end portions on the screen 33 among the images projected by each of the projection units 32-11, 32-12, 32-21, 32-22, 32-31, and 32-32 will be described.

That is, the optical path of the image at the pixel position Psc1 of the images projected by the projection unit 32-11 is an optical path r11 represented by a solid line, and the optical path of the image at the pixel position Psc1 of the images projected by the projection unit 32-12 is an optical path r12 represented by a dotted line.

Furthermore, the optical paths of the images at the pixel position Psc1 of the images projected by the projection units 32-21 and 32-22 are an optical path r21-1 represented by a two-dot chain line and r22-1 represented by a one-dot chain line, respectively.

Moreover, the optical path of the image at the pixel position Psc2 of the images projected by the projection unit 32-31 is an optical path r31 represented by a two-dot chain line, and the optical path of the image at the pixel position Psc2 of the images projected by the projection unit 32-32 is an optical path r32 represented by a one-dot chain line.

Furthermore, the optical paths of the images at the pixel position Psc2 of the images projected by the projection units 32-21 and 32-22 are an optical path r21-2 represented by a solid line and r22-2 represented by a dotted line, respectively.

The viewer H1 views the images of the optical paths r22-1 to r32 at a viewpoint V1 as a left eye, and views the images of the optical paths r21-1 to r31 at a viewpoint V2 as a right eye.

Furthermore, the viewer Hn views the images of the optical paths r12 to r22-2 at a viewpoint Vn-1 as a left eye, and views the images of the optical paths r11 to r21-2 at a viewpoint Vn as a right eye.

That is, viewing of a three-dimensional image is realized by the viewers H1 and Hn viewing images in different viewing directions with the right and left eyes.

Note that Fig. 2 is a top view illustrating a state where the screen 33 is provided in front of the projection units 32 in projection directions in a state where the projection units 32 are arranged in the horizontal direction.

<Regarding Correction of multi-viewpoint image>

Here, in describing correction of a multi-viewpoint image, a relationship between an image projected on the screen 33 by each of the projection units 32 and an image projected on the screen 33 and further reflected by the screen 33 to be actually viewed will be described.

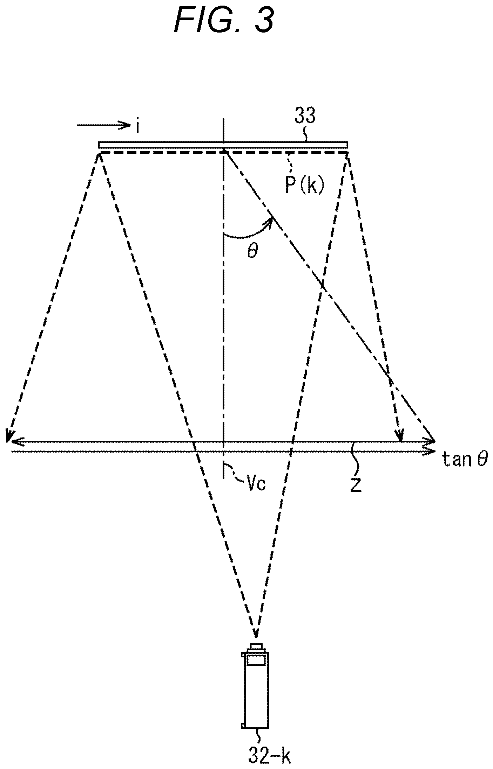

As indicated by dotted lines in Fig. 3, for example, an image P(k) projected on the screen 33 by a projection unit 32-k is reflected by the screen 33 and viewed in a range between arrows indicated by dotted lines of a viewing zone Z in the drawing.

At this time, when an angle formed by a position on the image P(k) facing a center position Vc, which is a center position of the viewing zone Z, and a position on the viewing zone Z, which is a viewing direction, is defined as an angle $\theta$, a pixel column at a horizontal position i on the viewing zone Z is assumed to be represented by $\tan\theta$ on the viewing zone Z.

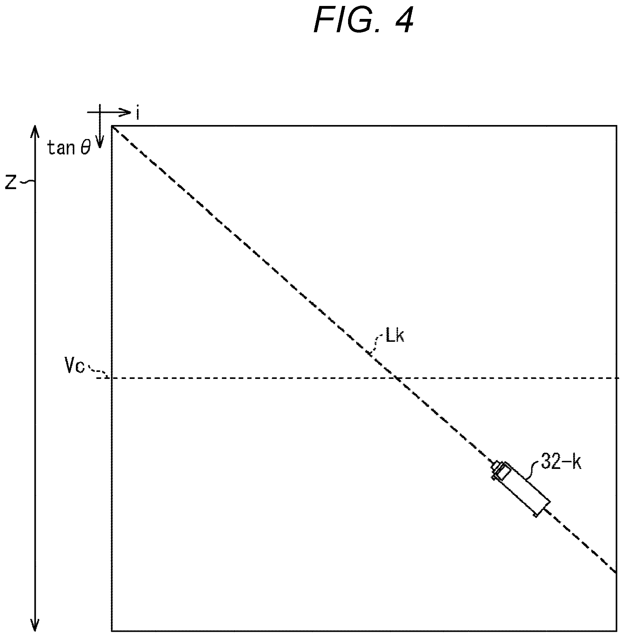

Thus, a relationship between the pixel column at the horizontal position i on the image P(k) projected on the screen 33 and a pixel column viewed at $\tan\theta$, which is a horizontal position on the viewing zone Z, is as indicated by dotted lines in Fig. 4.

That is, as illustrated in Fig. 4, in a case where the horizontal position i of the pixel column on the image P(k) projected by the projection unit 32-k is taken as a horizontal axis, and $\tan\theta$, which is the horizontal position in the viewing zone Z, is taken as a vertical axis (a downward direction in the drawing is assumed to be positive), the horizontal position i of the pixel column on the image P projected by the projection unit 32-k and $\tan\theta$, which is the horizontal position on the viewing zone Z, have a relationship represented by a straight line Lk indicated by a right-downward dotted line.

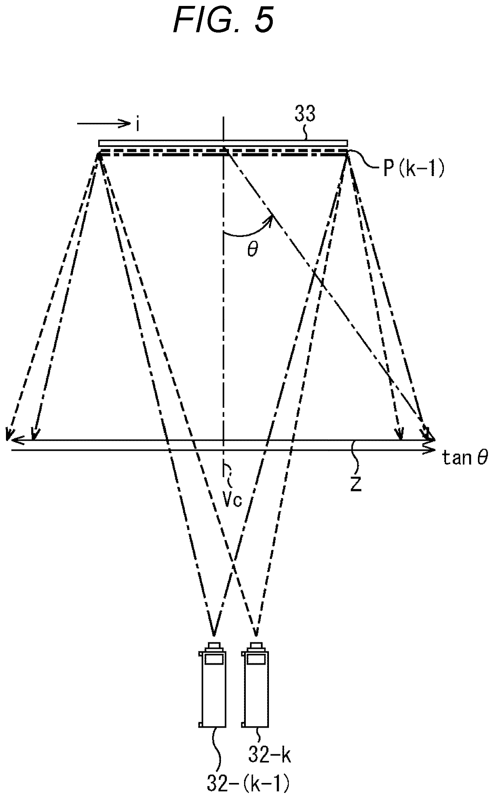

Thus, for example, as illustrated in Fig. 5, in a case where a projection unit 32-(k-1) is provided on the left side in the drawing relative to the projection unit 32-k, an image P(k-1) projected on the screen 33 is set as a range between arrows indicated by one-dot chain lines of the viewing zone Z in the drawing.

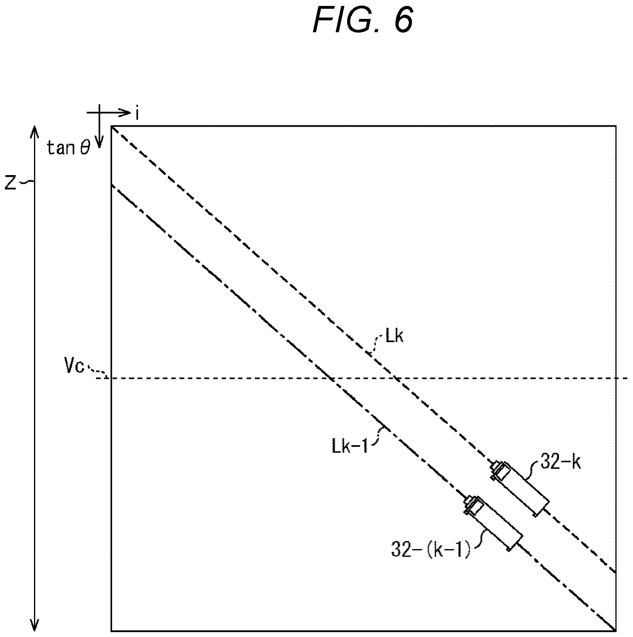

At this time, a horizontal position i of a pixel column on the image P(k-1) projected by the projection unit 32-(k-1) and $\tan\theta$, which is the horizontal position on the viewing zone Z, have a relationship represented by a straight line Lk-1 indicated by a right-downward one-dot chain line as illustrated in Fig. 6.

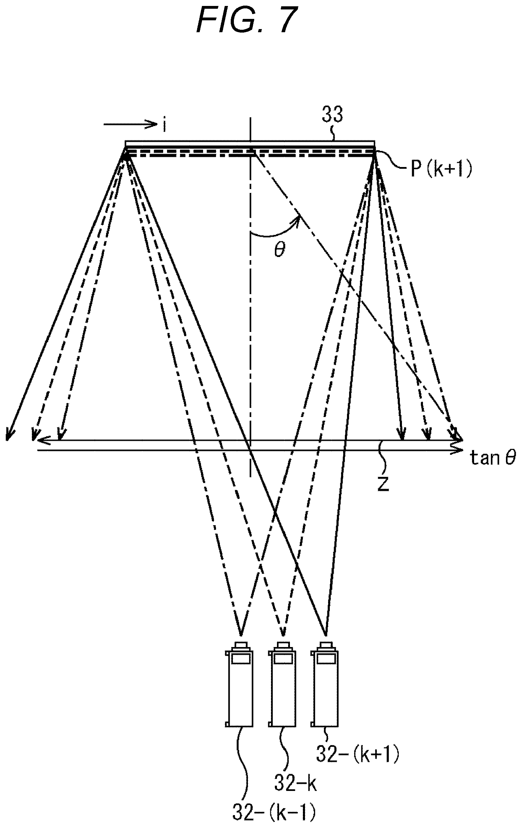

Similarly, for example, as illustrated in Fig. 7, in a case where a projection unit 32-(k+1) is provided on the right side in the drawing relative to the projection unit 32-k, an image P(k+1) projected on the screen 33 is set as a range between arrows represented by straight lines indicated by solid lines of the viewing zone Z in the drawing.

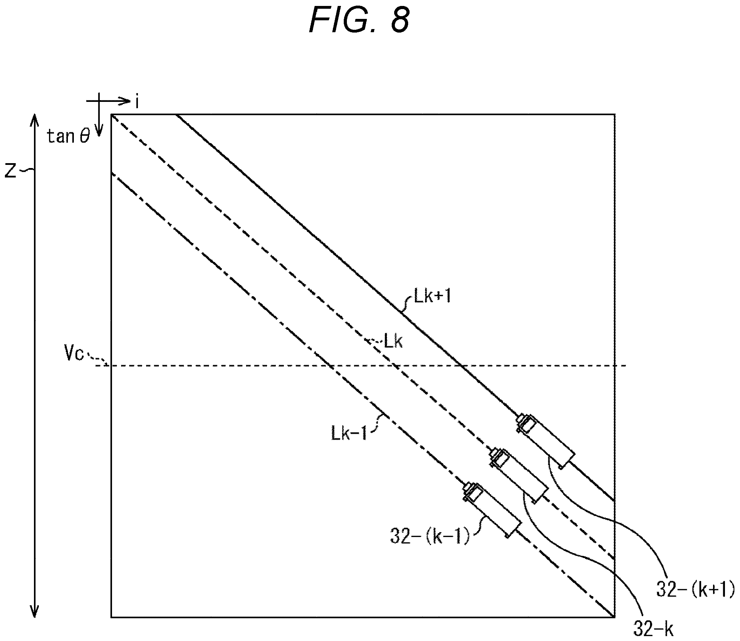

At this time, a horizontal position i of a pixel column on the image P(k+1) projected by the projection unit 32-(k+1) and tanθ, which is the horizontal position on the viewing zone Z, have a relationship represented by a straight line Lk+1 indicated by a right-downward solid line as illustrated in Fig. 8.

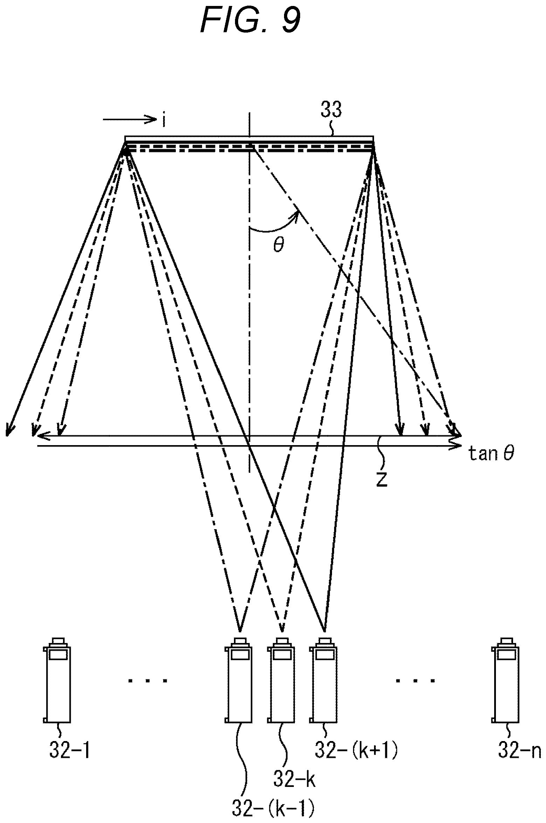

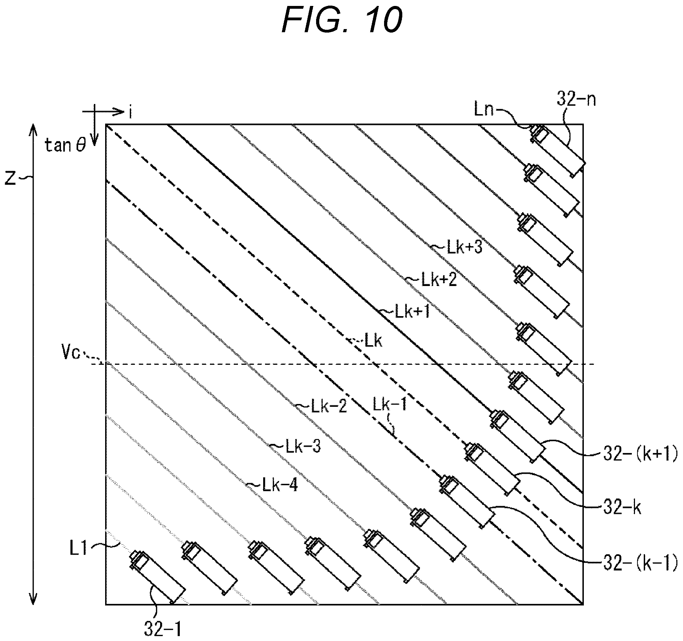

In view of the above, when the plurality of projection units 32-1 to 32-n is arranged in the horizontal direction as illustrated in Fig. 9, horizontal positions i of pixel columns on images projected by the projection units 32-1 to 32-n and tanθ, which is the horizontal position on the viewing zone Z, have relationships represented by right-downward straight lines L1 to Ln as illustrated in Fig. 10.

Note that, in Fig. 10, only the straight lines L1 and Ln and straight lines in the vicinity of the straight line Lk are denoted by reference signs, and reference signs for other straight lines are omitted.

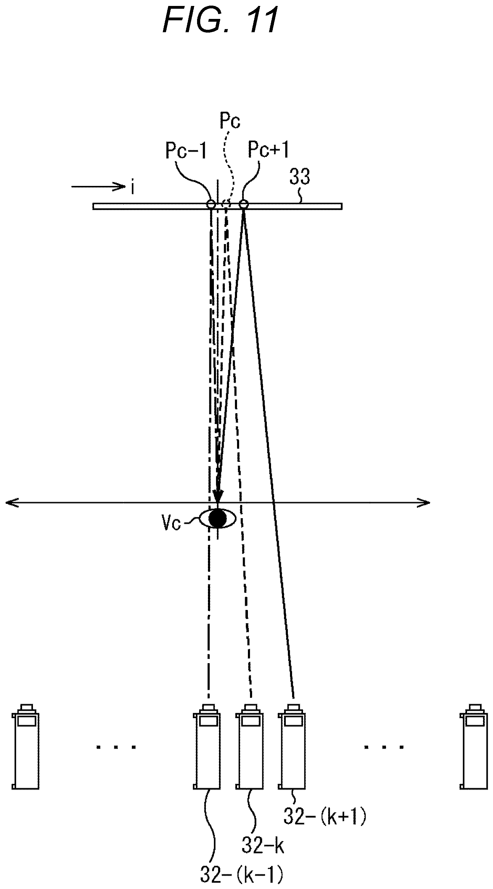

In a case where the projection units 32-1 to 32-n are arranged as illustrated in Fig. 9, when viewing is performed at the center position Vc in the viewing zone Z in a state where the diffusion plate 34 is not provided on the screen 33, the screen 33 is viewed as illustrated in Fig. 11.

At this time, as illustrated in Fig. 11, it is assumed that a pixel column of an image on the screen 33 facing the center position Vc is between a pixel column Pc projected by the projection unit 32-k and a pixel column Pc-1 projected by the projection unit 32-(k-1).

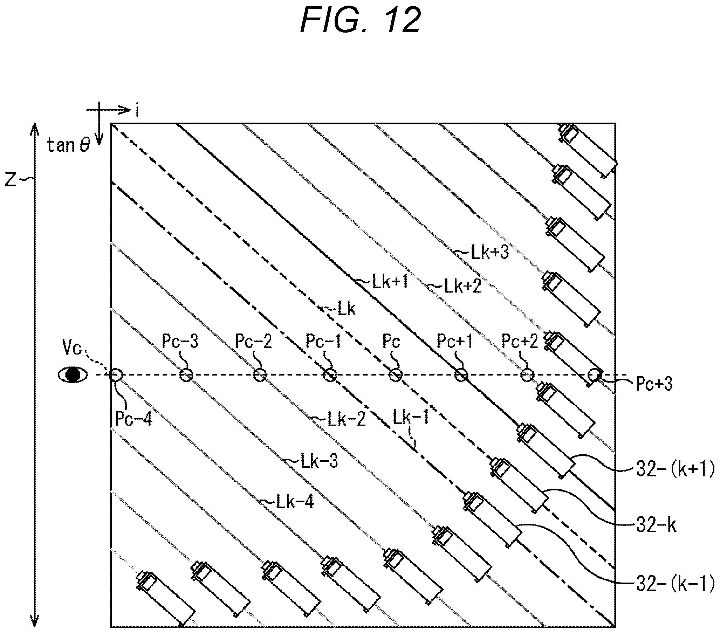

At this time, at the center position Vc, as illustrated in Fig. 12, images of pixel columns Pc-4 to Pc+3 on straight lines Lk-4 to Lk+3 on the center position Vc are viewed as images in a discrete state in the horizontal direction.

Here, the pixel columns Pc-4 to Pc+3 are pixel columns projected by the projection units 32-(k-4) to 32-(k+3), respectively, on the screen 33 viewed at the position of the center position Vc.

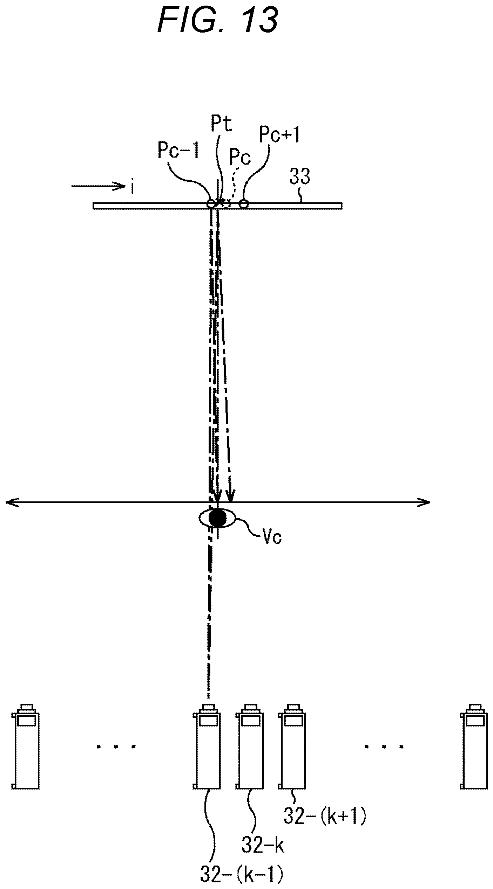

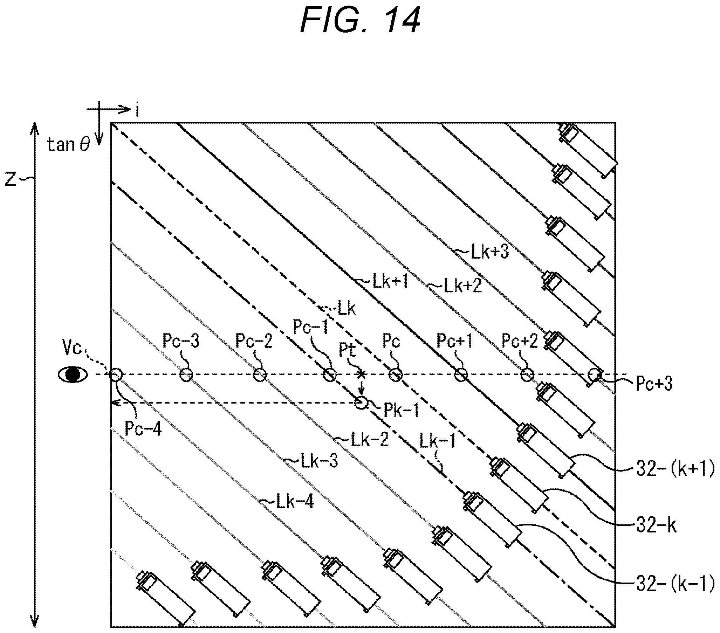

Thus, in a case where the pixel column of an image on the screen 33 facing the center position Vc is defined as, for example, a pixel column Pt between the pixel column Pc-1 and the pixel column Pc as illustrated in Fig. 13, the image of the pixel column Pt cannot be viewed without moving from the center position Vc to a position Vc', as illustrated in Fig. 14.

Note that, when moving to the position Vc', the discrete but viewable pixel columns Pc-4 to Pc+3 cannot be viewed at the center position Vc.

Therefore, in the present disclosure, to enable viewing of the images of the pixel columns discrete in the horizontal direction projected on the screen 33 as continuous images in the horizontal direction, the diffusion plate 34 is provided in the front stage of the screen 33.

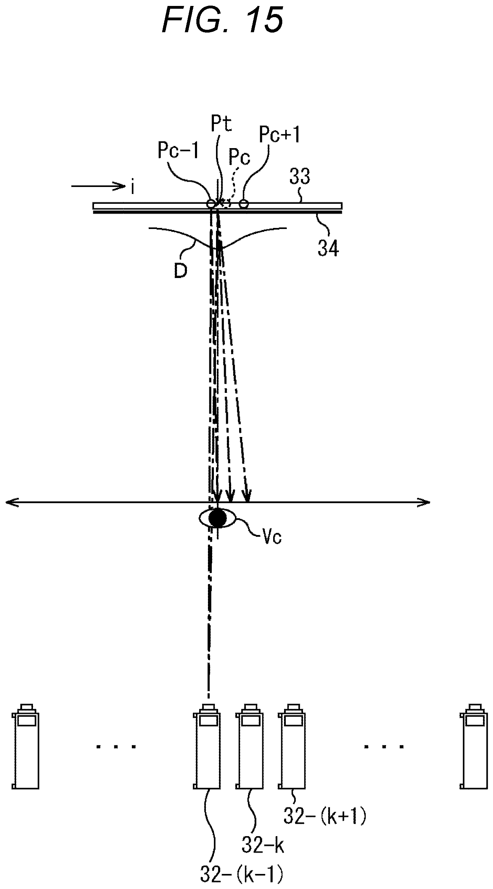

That is, when the diffusion plate 34 is provided in the front stage of the screen 33, as illustrated in Fig. 15, images of each pixel column reflected by the screen 33 are diffused at a predetermined angle relative to the horizontal direction and in a predetermined diffusion distribution D, and the images viewed as images including pixel columns discrete in the horizontal direction can be viewed as images including pixel columns continuous in the horizontal direction.

Note that a downward convex waveform in the horizontal direction in Fig. 15 schematically expresses the diffusion distribution D, and it is represented that, according to this diffusion distribution, optical paths of the same pixel column are spread and reflected as indicated by arrows of one-dot chain lines. Furthermore, although the number of the arrows of the one-dot chain lines is three in Fig. 15, the number does not specifically express the number of optical paths, but schematically expresses the fact that the optical paths are diffused.

The diffusion plate 34 diffuses the images of each pixel column at a predetermined diffusion angle, so that the images are diffused in the diffusion distribution D having a peak of diffusion intensity at the viewing position where the images are discretely viewed when the diffusion plate 34 is not provided.

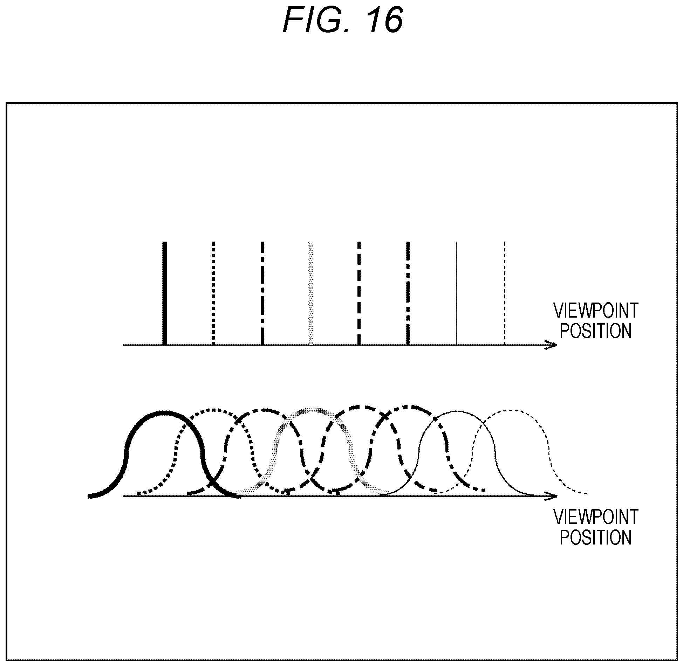

That is, in a case where the diffusion plate 34 is not provided, as illustrated in the upper part of Fig. 16, the images are viewed as images including pixel columns discrete in the horizontal direction.

On the other hand, in a case where the diffusion plate 34 is provided, as illustrated in the lower part of Fig. 16, images of discretely viewable pixel columns are viewed after being diffused so as to have the diffusion distribution D having a peak of diffusion intensity of the discretely viewable pixel columns.

Note that, in Fig. 16, each line type expresses an image of a different pixel column, and in the upper part of Fig. 16, it is expressed that the images are viewed as images including discrete pixel columns. Furthermore, in the lower part of Fig. 16, it is expressed that the images of each pixel column are viewed in a state of being diffused in the diffusion distribution D having a peak at a position where the images of each pixel column are viewed.

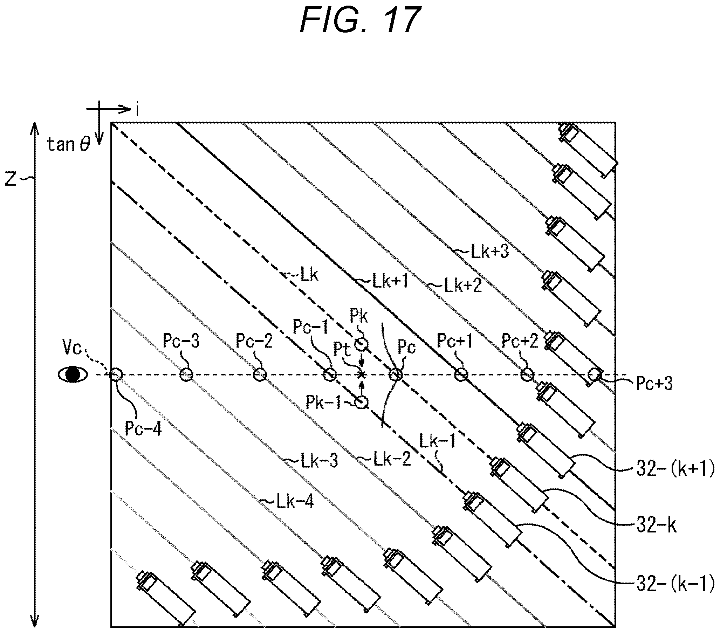

Thus, for example, as illustrated in Fig. 17, at the pixel column Pt between the pixel column Pc and the pixel column Pc-1, since the images of the pixel columns Pc and Pc-1 that can be viewed only from a nearby viewing position are diffused, an image can be viewed from the center position Vc as an image in a state where both of the images are mixed.

As a result, the images viewed from the center position Vc can be viewed as images in which pixel columns are continuously arranged in the horizontal direction.

However, in this case, at the pixel column Pt, since the images of the pixel columns Pc and Pc-1 are diffused, the image is viewed from the center position Vc as an image in a state where both of the images are mixed, but when images of not only nearby pixel columns but also distant pixel columns are mixed, blurring caused by crosstalk (crosstalk deterioration) occurs.

Furthermore, in the projection unit 32, an image is projected via a lens, and blurring (optical deterioration) occurs in the projected image due to an influence of a lens MTF (lens performance expressed by an MTF curve).

Therefore, the projected image needs to be corrected for blurring caused by the crosstalk and blurring caused by the lens MTF.

<Blurring Caused by Crosstalk and Blurring Caused by Lens MTF>

Blurring caused by crosstalk (crosstalk deterioration) and blurring caused by a lens MTF (optical deterioration) will be described.

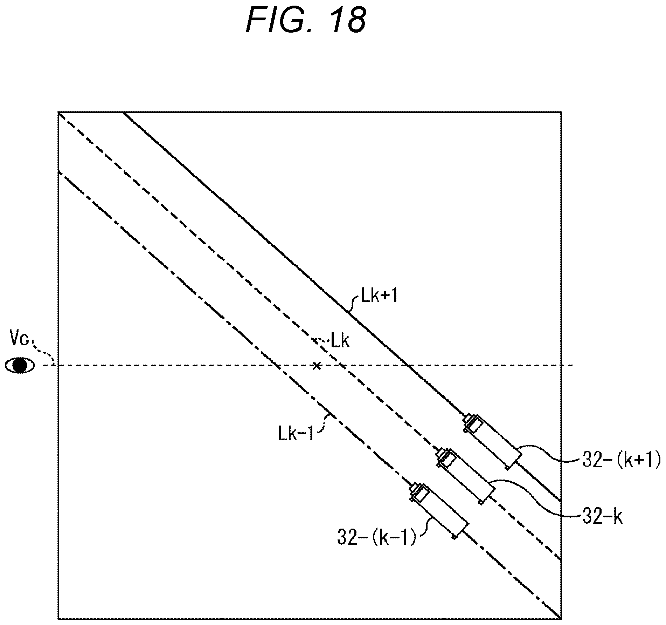

Note that, here, as illustrated in Fig. 18, the straight lines Lk-1, Lk, and Lk+1 on which the pixel columns projected by the projection units 32-(k-1), 32-k, and 32-(k+1) are arranged will be described.

Furthermore, here, blurring caused by crosstalk and blurring caused by a lens MTF that occur at the pixel column Pt when viewing from the center position Vc is performed will be considered.

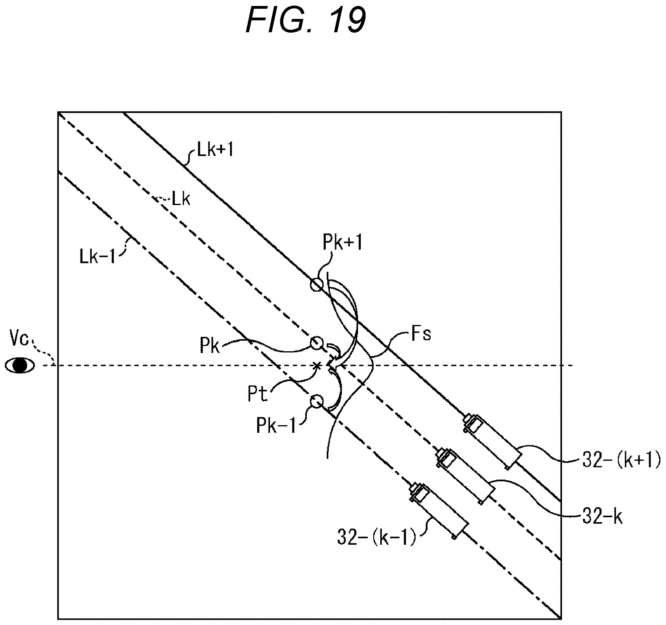

In this case, as illustrated in Fig. 19, the image of the pixel column Pt is viewed as an image in which blurring by the diffusion plate 34 occurs due to crosstalk in which each of the images of the pixel columns Pk+1, Pk, and Pk-1 on the straight lines Lk-1, Lk, and Lk+1 respectively projected by the projection units 32-(k+1) to 32-(k-1) is mixed with the image of the pixel column Pt at diffusion intensity corresponding to each deterioration function Fs (function corresponding to the diffusion distribution D of the diffusion plate 34).

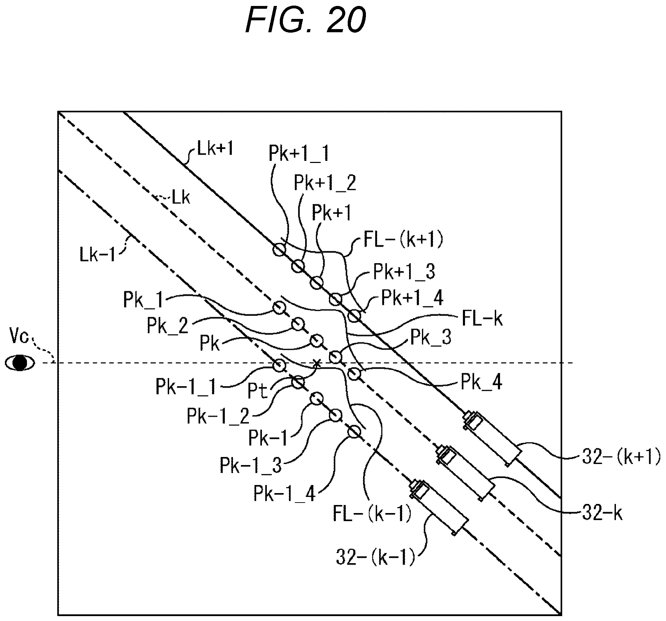

Furthermore, as illustrated in Fig. 20, in the images of the pixel column Pk+1 and the surrounding pixel columns Pk+1_1 to Pk+1_4 on the straight line Lk+1, blurring represented by a deterioration function FL-(k+1) according to a lens MTF of the projection unit 32-(k+1) occurs.

Similarly, in the images of the pixel column Pc and the surrounding pixel columns Pk_1 to Pk_4 on the straight line Lk, blurring represented by a deterioration function FL-k according to a lens MTF of the projection unit 32-k occurs.

Moreover, in the images of the pixel column Pk-1 and the surrounding pixel columns Pk-1_1 to Pk-1_4 on the straight line Lk-1, blurring represented by a deterioration function FL-(k-1) according to a lens MTF of the projection unit 32-(k-1) occurs.

As a result, the image of the pixel column Pt is viewed in a state where blurring occurs by combining blurring caused by the crosstalk by the diffusion plate 34 (hereinafter, also referred to as blurring caused by the crosstalk or crosstalk deterioration) and blurring caused by the lens MTF of each of the projection units 32-(k+1) to 32-(k-1) (hereinafter, also referred to as blurring caused by the lens MTF or optical deterioration).

<Example of Independently Correcting blurring Caused by Crosstalk and Blurring Caused by Lens MTF>

Here, as a method of correcting blurring caused by the crosstalk (crosstalk deterioration) and blurring caused by the lens MTF (optical deterioration), an example in which the blurring caused by the crosstalk (crosstalk deterioration) and the blurring caused by the lens MTF (optical deterioration) are corrected independently from each other will be described.

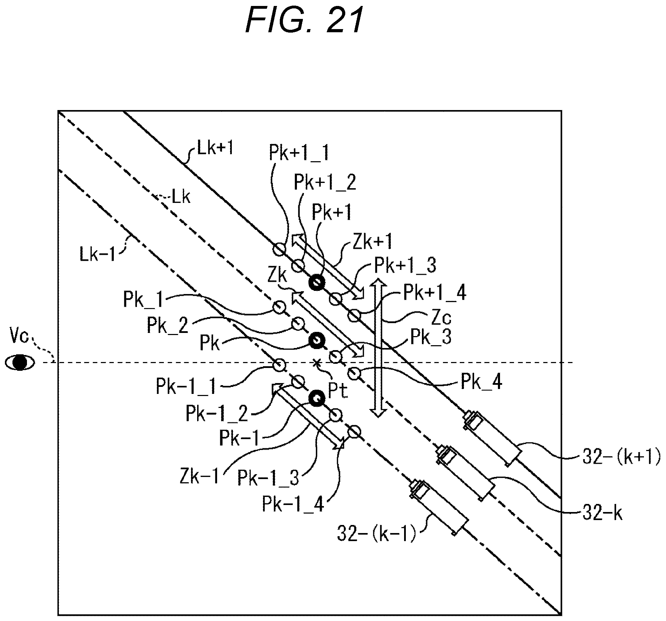

Here, as illustrated in Fig. 21, correction in directions of an arrow Zk+1 in the drawing based on the deterioration function FL-(k+1) of the lens MTF of the projection unit 32-(k+1) is applied to pixels of the pixel column Pk+1 on the straight line Lk+1 by using pixels of the surrounding pixel columns Pk+1_1 to Pk+1_4.

Similarly, correction in directions of an arrow Zk in the drawing based on the deterioration function FL-k of the lens MTF of the projection unit 32-k is applied to pixels of the pixel column Pk on the straight line Lk by using the surrounding pixel columns Pk_1 to Pk_4.

Moreover, correction in directions of an arrow Zk-1 in the drawing based on the deterioration function FL-(k-1) of the lens MTF of the projection unit 32-(k-1) is applied to the pixel column Pk-1 on the straight line Lk-1 by using the surrounding pixel columns Pk-1_1 to Pk-1_4.

As a result, correction based on the lens MTF is applied to each pixel of the pixel columns Pk-1, Pk, and Pk+1 having the same horizontal direction on the image as that of the pixel column Pt.

Next, pixels of the pixel column Pt are corrected in directions of an arrow Zc in the drawing based on the deterioration function Fs in each of the straight lines Lk-1, Lk, and Lk+1 in the pixel columns Pk-1, Pk, and Pk+1.

As a result, in each pixel in the pixel column Pt, correction is applied to blurring caused by the lens MTF of each of the projection units 32-(k-1), 32-k, and 32-(k+1) and blurring caused by crosstalk between each other.

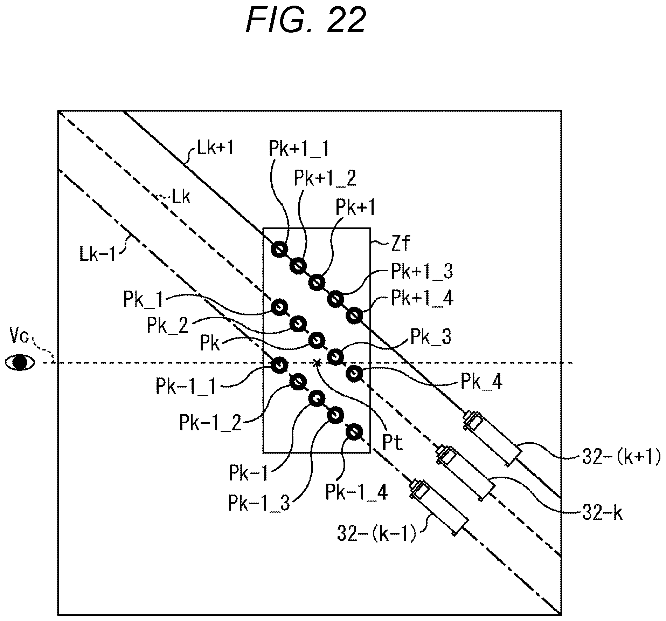

However, for example, although it is assumed that the pixel column Pk_3 closest to the pixel column Pt in Fig. 22 has the highest correlation, correction is applied in a state where the correlation is ignored because the blurring caused by the crosstalk and the blurring caused by the lens MTF are corrected independently from each other.

For this reason, when the pixels of the pixel column Pt are corrected, presence or absence of correlation according to a distance in a two-dimensional space is not considered. Thus, although the blurring caused by the crosstalk and the blurring caused by the lens MTF are corrected, it cannot be said that the correction is optimal.

<Example of Integrally and Simultaneously Correcting Blurring Caused by Crosstalk and Blurring Caused by Lens MTF>

Thus, the correction unit 36 of the present disclosure generates inverse functions (inverse filters) for integrally and simultaneously correcting the blurring caused by the crosstalk (crosstalk deterioration) and the blurring caused by the lens MTF (optical deterioration) and outputs the inverse functions (inverse filters) to the image generation unit 31. Then, the image generation unit 31 uses the inverse functions (inverse filters) to correct generated multi-viewpoint images, outputs the corrected multi-viewpoint images to the projection units 32-1 to 32-n, and causes the projection units 32-1 to 32-n to project the corrected multi-viewpoint images.

For example, as illustrated in Fig. 22, the image of the pixel column Pt is corrected by multiplying pixels of pixel columns in the vicinity of the pixel column Pt in a range Zf, for example, the pixel columns Pk-1, Pk-1_1 to Pk-1_4, Pk, Pk_1 to Pk_4, Pk+1, and Pk+1_1 to Pk+1_4 by inverse functions (inverse filters) for integrally and simultaneously correcting the blurring caused by the crosstalk and the blurring caused by the lens MTF.

Here, the inverse functions for applying correction are inverse functions (inverse filters) obtained on the basis of a transfer function (crosstalk deterioration transfer function) representing a generation model of the blurring caused by the crosstalk, and a transfer function (optical deterioration transfer function) representing a generation model of the blurring caused by the lens MTF.

More specifically, an input image and an output image that is projected without being corrected are expressed by the following Equation (1).

$$Y = D \cdot M(X)$$

$$\cdots \quad (1)$$

Here, X is the input image, Y is the output image, D(X) is the transfer function representing the generation model of the blurring caused by the crosstalk, and M(X) is the transfer function representing the generation model of the blurring caused by the lens MTF.

The correction unit 36 obtains, in advance, the transfer function D(X) representing the generation model of the blurring caused by the crosstalk as a function corresponding to a diffusion distribution for images in a unit of a pixel column by the diffusion plate 34 by, for example, causing the projection unit 32 to project a known test pattern on the screen 33, capturing an image by the imaging unit 35 via the diffusion plate 34, and comparing the captured test pattern with the known test pattern.

Furthermore, the correction unit 36 obtains, in advance, the transfer function M(X) representing the generation model of the blurring caused by the lens MTF as a function by, for example, causing the projection unit 32 to project a known test pattern on the screen 33, capturing an image by the imaging unit 35 via the diffusion plate 34, and comparing the captured test pattern with the known test pattern. Furthermore, the transfer function M(X) may be obtained on the basis of data of the lens MTF individually preset for each of the projection units 32.

Then, by obtaining inverse functions (inverse filters) on the basis of the transfer functions D(X) and M(X) and multiplying the input image by the inverse functions (inverse filters), the correction unit 36 corrects the output image projected on the screen 33 and diffused by the diffusion plate 34 to be viewed.

$$Y' = D \cdot M (D^{-1} \cdot M^{-1}(X))$$

$$\cdots \quad (2)$$

Here, Y' is the corrected output image, $D(X)^{-1}$ is the inverse function of the transfer function representing the generation model of the blurring caused by the crosstalk, and $M(X)^{-1}$ is the inverse function of the transfer function representing the generation model of the blurring caused by the lens MTF.

Thus, $(D^{-1} \cdot M^{-1}(X))$ serving as the inverse functions (inverse filters) makes it possible to integrally and simultaneously correct the blurring caused by the crosstalk and the blurring caused by the lens MTF.

That is, the correction unit 36 obtains $(D^{-1} \cdot M^{-1}(X))$ serving as the inverse functions (inverse filters) by the method described above and supplies $(D^{-1} \cdot M^{-1}(X))$ to the image generation unit 31.

When the image generation unit 31 generates the images P1 to Pn on the basis of the input images PM1 (Fig. 1), the image generation unit 31 multiplies the images P by $(D^{-1} \cdot M^{-1}(X))$ serving as the inverse functions (inverse filters) supplied from the correction unit 36 in a unit of a pixel column of each of the images P, so that the blurring caused by the crosstalk and the blurring caused by the lens MTF are integrally and simultaneously corrected.

By this processing, since the blurring caused by the crosstalk (crosstalk deterioration) and the blurring caused by the lens MTF (optical deterioration) are integrally and simultaneously corrected, correction is appropriately applied to the surrounding pixel columns according to a spatial position of a pixel column to be corrected, and it becomes possible to correct a three-dimensional image to be viewed with high accuracy.

As a result, even when the image processing unit 11 has a configuration in which the number of projection units 32 is small, a diffusion angle by the diffusion plate 34 is set wide, and crosstalk easily occurs, it is possible to realize viewing of a high-definition three-dimensional image.

Note that, by adjusting a constraint term of each of $D^{-1}(X)$ and $M^{-1}(X)$ in $(D^{-1} \cdot M^{-1}(X))$ serving as the inverse functions (inverse filters), adjustment may be performed so as to preferentially correct one of the blurring caused by the crosstalk (crosstalk deterioration) and the blurring caused by the lens MTF (optical deterioration).

<Display Processing>

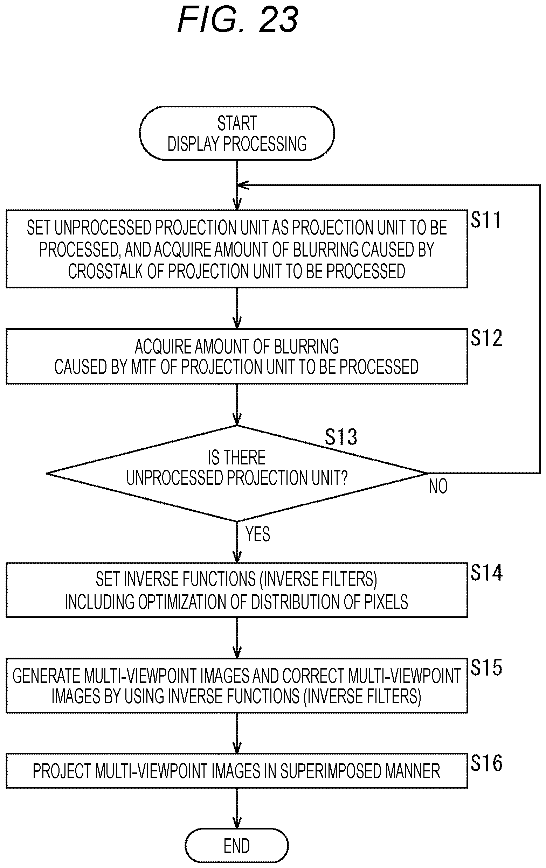

Next, display processing by the image processing unit 11 in Fig. 1 will be described with reference to a flowchart in Fig. 23.

In Step S11, the correction unit 36 sets an unprocessed projection unit 32 among the projection units 32-1 to 32-n as a projection unit to be processed, and acquires and stores an amount of crosstalk on the screen 33 of the projection unit 32 to be processed as information regarding an amount of blurring caused by crosstalk.

More specifically, for example, the image generation unit 31 generates a test pattern, and causes the projection unit 32 to be processed to project the test pattern on the screen 33, and the imaging unit 35 captures an image of the test pattern projected on the screen 33 via the diffusion plate 34, and outputs the captured image of the test pattern to the correction unit 36.

Then, the correction unit 36 measures a diffusion distribution on the basis of comparison between a known test pattern and the captured image of the test pattern, and specifies the amount of crosstalk from the diffusion distribution.

Note that the correction unit 36 may acquire, in advance, a design value or an amount of crosstalk that is measured by another measurement instrument.

In Step S12, the correction unit 36 acquires and stores an amount of blurring of the projection unit 32 to be processed as information regarding an amount of blurring caused by a lens MTF.

More specifically, for example, the image generation unit 31 generates a test pattern, and causes the projection unit 32 to be processed to project the test pattern on the screen 33, and the imaging unit 35 captures an image of the test pattern projected on the screen 33, and outputs the captured test pattern to the correction unit 36.

The correction unit 36 specifies the amount of blurring related to the lens MTF on the basis of comparison between a known test pattern and the captured image of the test pattern.

Note that the correction unit 36 may acquire, in advance, a design value or an amount of blurring related to the lens MTF that is measured by another measurement instrument.

In Step S13, the correction unit 36 determines whether or not there is an unprocessed projection unit 32, and in a case where there is an unprocessed projection unit 32, the processing returns to Step S11.

That is, the processing of Steps S11 to S13 is repeated until the information regarding the amount of crosstalk (the amount of blurring caused by the crosstalk) and the information regarding the amount of blurring caused by the lens MTF that are related to all the projection units 32 are acquired.

Then, in a case where it is considered in Step S13 that the information regarding the amount of crosstalk (the amount of blurring caused by the crosstalk) and the information regarding the amount of blurring caused by the lens MTF related to all the projection units 32 are acquired, the processing proceeds to Step S14.

In Step S14, the correction unit 36 sets inverse functions (inverse filters) including optimization of a distribution of pixels on the basis of the information regarding the amount of crosstalk (the amount of blurring caused by the crosstalk) and the information regarding the amount of blurring caused by the lens MTF that are related to all the projection units 32, and supplies the inverse functions (inverse filters) to the image generation unit 31.

That is, as described with reference to Fig. 22, the correction unit 36 sets the inverse functions (inverse filters) including $(D^{-1} \cdot M^{-1}(X))$ in Equation (2) described above for integrally and collectively correcting the blurring caused by the crosstalk and the blurring caused by the lens MTF.

In Step S15, the image generation unit 31 reads input images to generate images P1 to Pn, and multiplies each of the images P1 to Pn by the inverse functions (inverse filters), so that the blurring caused by the crosstalk and the blurring caused by the lens MTF are integrally and simultaneously corrected.

Then, the image generation unit 31 outputs the images P1 to Pn in which the blurring caused by the crosstalk and the blurring caused by the lens MTF are integrally and simultaneously corrected to the projection units 32-1 to 32-n, respectively.

In Step S16, the projection units 32-1 to 32-n respectively project, in a superimposed manner, the images P1 to Pn in which the blurring caused by the crosstalk and the blurring caused by the lens MTF are integrally and simultaneously corrected on the screen 33.

By the series of processing described above, P1 to Pn in which the blurring caused by the crosstalk (crosstalk deterioration) and the blurring caused by the lens MTF (optical deterioration) are integrally, collectively, and simultaneously corrected are projected on the screen 33 as multi-viewpoint images in a superimposed manner. As a result, a user who views the images via the diffusion plate 34 can view a three-dimensional image from which the blurring caused by the crosstalk and the blurring caused by the lens MTF are removed with high accuracy with naked eyes.

Note that the processing of Steps S11 to S14 may be performed offline in advance so that the inverse functions (inverse filters) are obtained in advance.

In this case, when the multi-viewpoint images are displayed in a superimposed manner, it is only necessary to perform the processing of Steps S15 and S16.

Furthermore, an example has been described above in which the image processing unit 11 in Fig. 1 includes the projection units 32 including the projectors, the screen 33 including the mirror, and the diffusion plate 34 including the anisotropic diffusion plate. However, any other configuration can be applied as long as the configuration enables viewing of a three-dimensional image.

For example, the projection units 32 and the screen 33 may include a liquid crystal display (LCD) or an organic light emitting diode (OLED), and the diffusion plate 34 may include a lenticular lens or a parallax barrier.

Furthermore, an example has been described in which the correction unit 36 generates inverse functions (inverse filters) used for correction from a transfer function representing a generation model of blurring caused by crosstalk and a transfer function representing a generation model of blurring caused by a lens MTF, and the image generation unit 31 corrects multi-viewpoint images by applying the inverse filters.

However, the image generation unit 31 may directly apply optimization processing similar to the correction using the inverse filters on pixels to apply similar correction.

<<2. Application Example 1>>

<Case Where Error Due to Inverse Functions Occurs>

An example has been described above in which blurring caused by crosstalk and blurring caused by a lens MTF are integrally, collectively, and simultaneously corrected by obtaining inverse functions (inverse filters) and multiplying an input image by the inverse functions (inverse filters). However, by multiplying the input image by the obtained inverse functions (inverse filters), some pixel values of pixels of the input image are saturated, and an error may occur as an image.

In such a case, an image may be generated by linear interpolation by using an image of a viewpoint where no error has occurred.

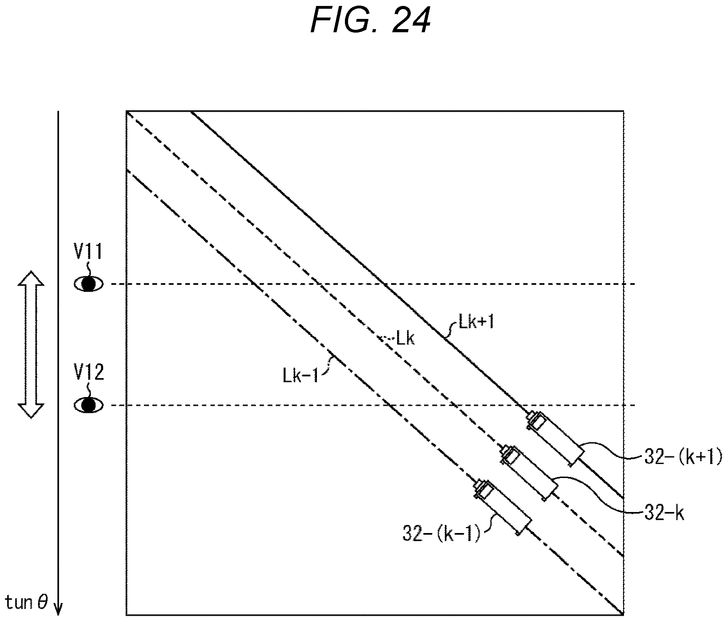

That is, for example, an example of generating multi-viewpoint images in a range of viewpoint positions V11 to V12 as illustrated in Fig. 24 will be considered.

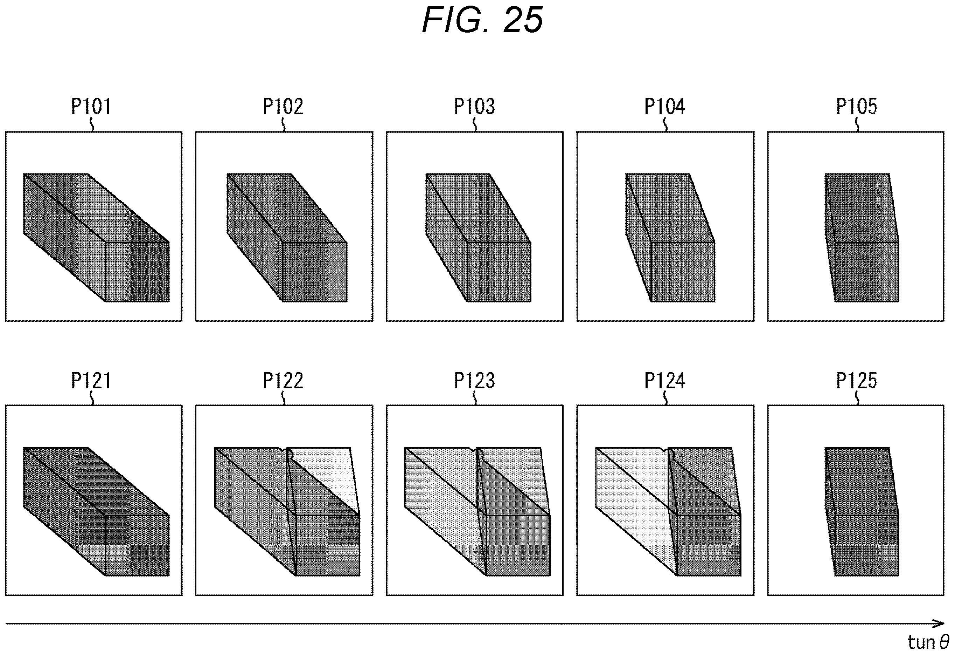

It is assumed that, when a viewpoint position is continuously changed in the range of the viewpoint positions V11 to V12 in Fig. 24, images P101 to P105 in the upper part of Fig. 25 are generated as images viewed at the corresponding viewpoint positions.

That is, it is assumed that, when the image P101 is viewed at the viewpoint position V11 and the image P105 is viewed at the viewpoint position V12, the images P102 to P104 are viewed at the corresponding viewpoint positions obtained by dividing a distance between the viewpoint position V11 and the viewpoint position V12 into four equal parts.

In a case where input images are multiplied by inverse functions (inverse filters) to obtain the images P101 to P105 in Fig. 25, it can be considered that no error occurs. However, due to a variation or the like in a part of coefficients or the like constituting the inverse functions, an error such as saturation of a pixel value may occur, and a failure may occur in the images.

In such a case, when the input images are multiplied by the inverse functions (inverse filters), a failure occurs in the generated images.

Thus, in a case where an error occurs, when the images P101 and P105 viewed at the viewpoint positions V11 and V12 are obtained, the images therebetween may be generated so as to be mixed according to the viewpoint positions.

That is, as illustrated in the lower part of Fig. 25, when images P121 and P125 are obtained as images corresponding to the images P101 and P105, an image P122 in which the image P121 with a density of 75% and the image P125 with a density of 25% are mixed is generated by interpolation.

Similarly, as illustrated in the lower part of Fig. 25, an image P123 in which the image P121 with a density of 50% and the image P125 with a density of 50% are mixed is generated by interpolation.

Moreover, as illustrated in the lower part of Fig. 25, an image P124 in which the image P121 with a density of 25% and the image P125 with a density of 75% are mixed is generated by interpolation.

In a case where a viewpoint is fixed by such mixing, the mixing is conspicuous, but a motion parallax, which is smoothness in a case of moving the viewpoint, is secured.

That is, since such a motion parallax, which is a human visual characteristic, is secured, when viewpoint positions for the images P121 to P125 in the lower part of Fig. 25 change, the images P121 to P125 can also be viewed as the images P101 to P105 in the upper part of Fig. 25 as a whole.

<Display Processing in Case Where Error Due to Inverse Functions occurs>

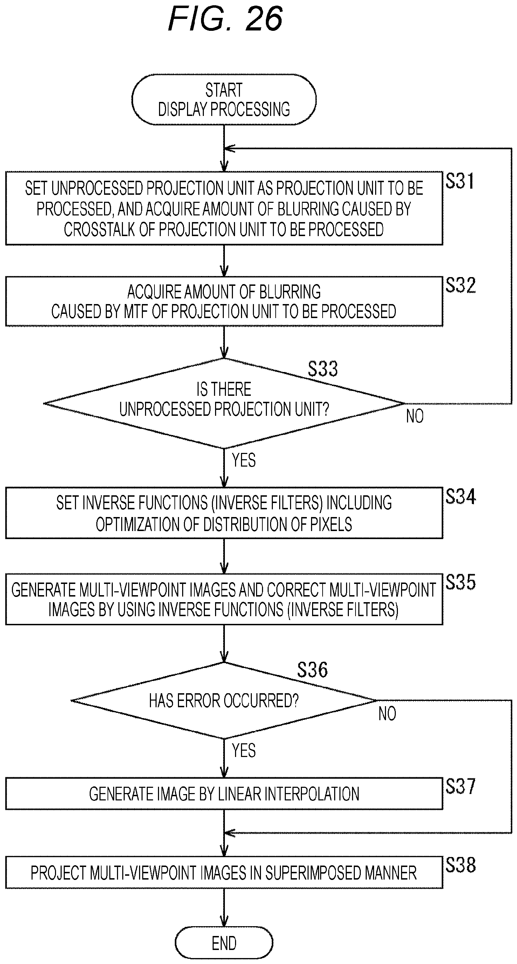

Next, display processing in a case where an error due to inverse functions occurs will be described with reference to a flowchart in Fig. 26. Note that, in the flowchart in Fig. 26, processing of Steps S31 to S35 and processing of Step S38 are similar to the processing of Steps S11 to S16 described with reference to Fig. 23, and thus the description thereof will be omitted.

That is, in Step S36, the image generation unit 31 determines, for example, whether or not an error indicating occurrence of a failure in the images, such as saturation of pixel values, has occurred in the images P1 to Pn generated by using the inverse functions (inverse filters).

In a case where it is determined in Step S36 that the error has occurred, the processing proceeds to Step S37.

In Step S37, as described with reference to the lower part of Fig. 25, the image generation unit 31 generates an image in which an error has occurred by interpolation by using images of viewpoint positions where no error has occurred.

By this processing, in a case where the error has occurred, the phase images of the viewpoint positions where no error has occurred is used to generate the image of the viewpoint position where the error has occurred by interpolation.

As a result, by using the inverse functions (inverse filters), it becomes possible to integrally, collectively, and simultaneously correct the blurring caused by the crosstalk (crosstalk deterioration) and the blurring caused by the lens MTF (optical deterioration), and even when an error has occurred by using the inverse functions (inverse filters), it becomes possible to obtain an image without a failure by generating the image by interpolation.

<<3. Application Example 2>>

An example has been described above in which multi-viewpoint images are projected by the image processing unit 11 in Fig. 1 so that a three-dimensional image can be viewed with naked eyes. However, it is also possible to project multi-viewpoint images that enable viewing of not only a three-dimensional image but also a different two-dimensional image for each viewpoint position, as long as the images are multi-viewpoint images.

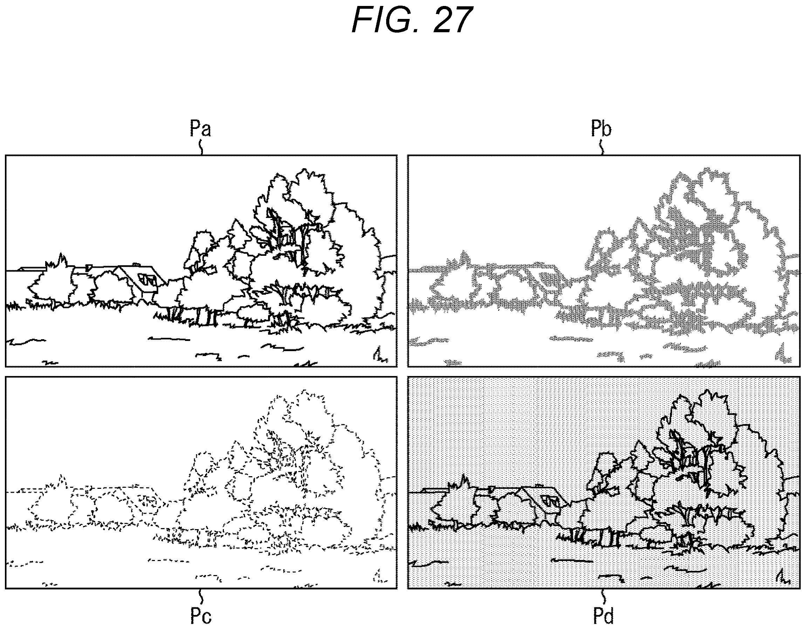

That is, for example, as illustrated in Fig. 27, two-dimensional images Pa to Pd at the same position with different brightness are generated.

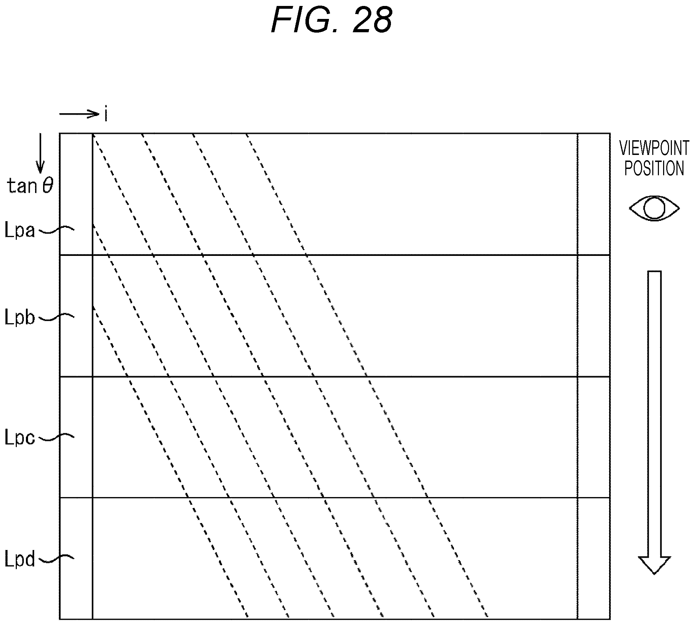

Then, multi-viewpoint images that enable viewing of an image Pa in a viewpoint position range Lpa in Fig. 28, viewing of an image Pb in a viewpoint position range Lpb, viewing of an image Pc in a viewpoint position range Lpc, and viewing of an image Pd in a viewpoint position range Lpd are projected.

Also in the example in which different two-dimensional images are viewable by changing the viewpoint position in this manner, as described above, by integrally, collectively, and simultaneously correcting blurring caused by crosstalk (crosstalk deterioration) and blurring caused by a lens MTF (optical deterioration), it is possible to appropriately correct the blurring caused by the crosstalk (crosstalk deterioration) and the blurring caused by the lens MTF (optical deterioration).

<<4. Example of Executing Processing by Software>>

Incidentally, the series of processing described above can be executed by hardware or by software. In a case where the series of processing is executed by software, programs constituting the software are installed from a recording medium in a computer which is built in dedicated hardware, a general-purpose personal computer, for example, in which various programs can be installed for execution of various functions, or the like.

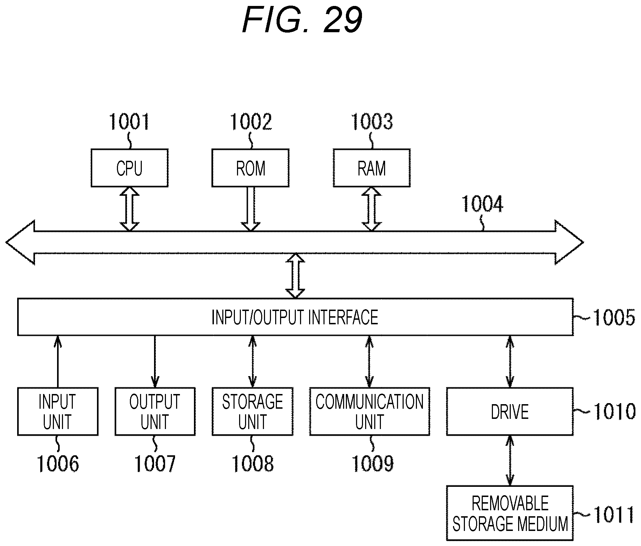

Fig. 29 illustrates a configuration example of the general-purpose computer. This personal computer includes a built-in central processing unit (CPU) 1001. To the CPU 1001, an input/output interface 1005 is connected via a bus 1004. To the bus 1004, a read only memory (ROM) 1002 and a random access memory (RAM) 1003 are connected.

The input/output interface 1005 is connected to an input unit 1006 including input devices such as a keyboard and a mouse, with which a user inputs an operation command, an output unit 1007 that outputs a processing operation screen and an image of a processing result to a display device, a storage unit 1008 including a hard disk drive that stores programs and various types of data, and a communication unit 1009 that includes a local area network (LAN) adapter and executes communication processing via a network represented by the Internet. Furthermore, the input/output interface 1005 is connected to a drive 1010 that reads and writes data from/in a removable storage medium 1011 such as a magnetic disk (including a flexible disk), an optical disk (including a compact disc-read only memory (CD-ROM) and a digital versatile disc (DVD)), a magneto-optical disk (including a mini disc (MD)), or a semiconductor memory.

The CPU 1001 executes various types of processing according to programs stored in the ROM 1002 or programs read from the removable storage medium 1011 such as the magnetic disk, the optical disk, the magneto-optical disk, or the semiconductor memory, installed in the storage unit 1008, and loaded from the storage unit 1008 to the RAM 1003. In the RAM 1003, for example, data necessary for the CPU 1001 to execute various types of processing is also stored if necessary.

In the computer configured as described above, the series of processing described above is performed by, for example, the CPU 1001 loading the programs stored in the storage unit 1008 to the RAM 1003 via the input/output interface 1005 and the bus 1004 to execute the programs.

The programs executed by the computer (CPU 1001) can be provided by being recorded on the removable storage medium 1011 serving as a package medium or the like, for example. Furthermore, the programs can be provided via a wired or wireless transmission medium such as a local area network, the Internet, or digital satellite broadcasting.

In the computer, the programs can be installed in the storage unit 1008 via the input/output interface 1005 by mounting the removable storage medium 1011 on the drive 1010. Furthermore, the programs can be received by the communication unit 1009 via a wired or wireless transmission medium, and can be installed in the storage unit 1008. Alternatively, the programs can be installed in advance in the ROM 1002 or the storage unit 1008.

Note that the programs executed by the computer may be programs in which a series of processing is performed in time series in the order described in the present specification or may be programs in which the processing is performed in parallel or at a necessary timing, such as when a call is made.

Note that the CPU 1001 in Fig. 29 implements the functions of the image generation unit 31 and the correction unit 36 in Fig. 1.

Furthermore, in the present specification, a system means a set of a plurality of components (devices, modules (parts), and the like), and it does not matter whether or not all the components are in the same housing. Therefore, a plurality of devices housed in separate housings and connected to one another via a network and one device including a plurality of modules housed in one casing are both the system.

Note that embodiments of the present disclosure are not limited to the embodiments described above, and various modifications can be made without departing from the gist of the present disclosure.

For example, the present disclosure can have a configuration of cloud computing in which one function is shared and processed in cooperation by a plurality of devices via a network.

Furthermore, the steps described in the flowcharts described above can be executed by one device, or can be shared and executed by a plurality of devices.

Moreover, in a case where a plurality of types of processing is included in one step, the plurality of types of processing included in the one step can be executed by one device, or can be shared and executed by a plurality of devices.

Note that the present disclosure can also have the following configurations.

<1> An image processing apparatus including:

a projection unit that projects a multi-viewpoint image; and
an image generation unit that generates the multi-viewpoint image by integrally and simultaneously applying correction to optical deterioration and correction to crosstalk deterioration.

<2> The image processing apparatus according to <1>, in which
the image generation unit generates the multi-viewpoint image by applying, to an input image, correction filters that integrally and simultaneously apply the correction to the optical deterioration and the correction to the crosstalk deterioration.

<3> The image processing apparatus according to <2>, further including
a correction unit that sets, as the correction filters, inverse filters including inverse functions of an optical deterioration transfer function representing a model that causes optical deterioration in the input image and a crosstalk deterioration transfer function representing a model that causes crosstalk deterioration in the input image.

<4> The image processing apparatus according to <3>, in which
the optical deterioration transfer function is set on the basis of an optical characteristic based on a modulation transfer function (MTF) curve of a lens used when the projection unit includes a projector.

<5> The image processing apparatus according to <3>, in which
the crosstalk deterioration transfer function is set on the basis of a diffusion distribution by a diffusion plate that diffuses the multi-viewpoint image projected by the projection unit in a unit of a pixel column.

<6> The image processing apparatus according to <5>, in which

the projection unit includes a projector, and the diffusion plate includes an anisotropic diffusion plate.

<7> The image processing apparatus according to <5>, in which
the projection unit includes a liquid crystal display (LCD) or an organic light emitting diode (OLED), and the diffusion plate includes a lenticular lens or a parallax barrier.

<8> The image processing apparatus according to <3>, in which
the correction unit adjusts constraint terms in the inverse functions, and sets the correction filters that preferentially correct one of the correction to the optical deterioration and the correction to the crosstalk deterioration.

<9> The image processing apparatus according to <2>, in which
when an error occurs in the multi-viewpoint image due to correction using the correction filters, the image generation unit generates a multi-viewpoint image corresponding to the multi-viewpoint image in which the error occurs by linear interpolation by using a multi-viewpoint image in which the error does not occur.

<10> The image processing apparatus according to <9>, in which
the multi-viewpoint image in which an error occurs due to correction using the correction filters includes an image including a pixel having a pixel value saturated.

<11> The image processing apparatus according to any one of <1> to <10>, in which
the multi-viewpoint image includes a multi-viewpoint image that enables viewing of a three-dimensional image according to a viewing position.

<12> The image processing apparatus according to any one of <1> to <10>, in which
the multi-viewpoint image includes a multi-viewpoint image that enables viewing of a two-dimensional image according to a viewing position.

<13> An image processing method including: image generation processing of generating a multi-viewpoint image projected by a projection unit by integrally and simultaneously applying correction to optical deterioration and correction to crosstalk deterioration.

<14> A program that causes a computer to function as:

a projection unit that projects a multi-viewpoint image; and
an image generation unit that generates the multi-viewpoint image by integrally and simultaneously applying correction to optical deterioration and correction to crosstalk deterioration.

REFERENCE SIGNS LIST

| | |
|---|---|
| 1 | Image processing unit |
| 31 | Image generation unit |
| 32, 32-1 to 32-n | Projection unit |
| 33 | Screen |
| 34 | Diffusion plate |
| 35 | Imaging unit |
| 36 | Correction unit |

**Claims**

1. An image processing apparatus comprising:

   a projection unit that projects a multi-viewpoint image; and
   an image generation unit that generates the multi-viewpoint image by integrally and simultaneously applying correction to optical deterioration and correction to crosstalk deterioration.

2. The image processing apparatus according to claim 1, wherein
   the image generation unit generates the multi-viewpoint image by applying, to an input image, correction filters that integrally and simultaneously apply the correction to the optical deterioration and the correction to the crosstalk deterioration.

3. The image processing apparatus according to claim 2, further comprising
   a correction unit that sets, as the correction filters, inverse filters including inverse functions of an optical deterioration transfer function representing a model that causes optical deterioration in the input image and a crosstalk deterioration transfer function representing a model that causes crosstalk deterioration in the input image.

4. The image processing apparatus according to claim 3, wherein
the optical deterioration transfer function is set on a basis of an optical characteristic based on a modulation transfer function (MTF) curve of a lens used when the projection unit includes a projector.

5. The image processing apparatus according to claim 3, wherein
the crosstalk deterioration transfer function is set on a basis of a diffusion distribution by a diffusion plate that diffuses the multi-viewpoint image projected by the projection unit in a unit of a pixel column.

6. The image processing apparatus according to claim 5, wherein
the projection unit includes a projector, and the diffusion plate includes an anisotropic diffusion plate.

7. The image processing apparatus according to claim 5, wherein
the projection unit includes a liquid crystal display (LCD) or an organic light emitting diode (OLED), and the diffusion plate includes a lenticular lens or a parallax barrier.

8. The image processing apparatus according to claim 3, wherein
the correction unit adjusts constraint terms in the inverse functions, and sets the correction filters that preferentially correct one of the correction to the optical deterioration and the correction to the crosstalk deterioration.

9. The image processing apparatus according to claim 2, wherein
when an error occurs in the multi-viewpoint image due to correction using the correction filters, the image generation unit generates a multi-viewpoint image corresponding to the multi-viewpoint image in which the error occurs by linear interpolation by using a multi-viewpoint image in which the error does not occur.

10. The image processing apparatus according to claim 9, wherein
the multi-viewpoint image in which an error occurs due to correction using the correction filters includes an image including a pixel having a pixel value saturated.

11. The image processing apparatus according to claim 1, wherein
the multi-viewpoint image includes a multi-viewpoint image that enables viewing of a three-dimensional image according to a viewing position.

12. The image processing apparatus according to claim 1, wherein
the multi-viewpoint image includes a multi-viewpoint image that enables viewing of a two-dimensional image according to a viewing position.

13. An image processing method comprising:
image generation processing of generating a multi-viewpoint image projected by a projection unit by integrally and simultaneously applying correction to optical deterioration and correction to crosstalk deterioration.

14. A program that causes a computer to function as:

a projection unit that projects a multi-viewpoint image; and
an image generation unit that generates the multi-viewpoint image by integrally and simultaneously applying correction to optical deterioration and correction to crosstalk deterioration.

*FIG. 1*

FIG. 2

EP 3 952 305 A1

# FIG. 3

*FIG. 4*

# FIG. 5

# FIG. 6

EP 3 952 305 A1

# FIG. 7

FIG. 8

EP 3 952 305 A1

# FIG. 9

# FIG. 10

EP 3 952 305 A1

## FIG. 11

*FIG. 12*

# FIG. 13

# FIG. 14

EP 3 952 305 A1

# FIG. 15

# FIG. 16

VIEWPOINT
POSITION

VIEWPOINT
POSITION

FIG. 17

EP 3 952 305 A1

EP 3 952 305 A1

## FIG. 18

FIG. 19

FIG. 20

FIG. 21

EP 3 952 305 A1

FIG. 22

# FIG. 23

```
              ┌─────────────────────┐
              │        START        │
              │  DISPLAY PROCESSING  │
              └──────────┬──────────┘
                         │  ◄───────────────────────┐
                         ▼                          │
    ┌──────────────────────────────────────────┐   │
    │ SET UNPROCESSED PROJECTION UNIT AS        │   │
    │ PROJECTION UNIT TO BE PROCESSED, AND      │ S11
    │ ACQUIRE AMOUNT OF BLURRING CAUSED BY      │   │
    │ CROSSTALK OF PROJECTION UNIT TO BE        │   │
    │ PROCESSED                                 │   │
    └──────────────────┬───────────────────────┘   │
                       ▼                            │
    ┌──────────────────────────────────────────┐   │
    │          ACQUIRE AMOUNT OF BLURRING       │ S12
    │ CAUSED BY MTF OF PROJECTION UNIT TO BE    │   │
    │                PROCESSED                  │   │
    └──────────────────┬───────────────────────┘   │
                       ▼                 S13        │
                  ╱─────────────╲                   │
                 ╱   IS THERE     ╲   NO            │
                ╱ UNPROCESSED       ╲──────────────┘
                ╲ PROJECTION UNIT?  ╱
                 ╲                 ╱
                  ╲───────┬───────╱
                          │ YES
                          ▼
    ┌──────────────────────────────────────────┐
    │   SET INVERSE FUNCTIONS (INVERSE FILTERS) │ S14
    │ INCLUDING OPTIMIZATION OF DISTRIBUTION OF │
    │                 PIXELS                    │
    └──────────────────┬───────────────────────┘
                       ▼
    ┌──────────────────────────────────────────┐
    │ GENERATE MULTI-VIEWPOINT IMAGES AND       │ S15
    │ CORRECT MULTI-VIEWPOINT IMAGES BY USING   │
    │ INVERSE FUNCTIONS (INVERSE FILTERS)       │
    └──────────────────┬───────────────────────┘
                       ▼
    ┌──────────────────────────────────────────┐
    │ PROJECT MULTI-VIEWPOINT IMAGES IN         │ S16
    │ SUPERIMPOSED MANNER                       │
    └──────────────────┬───────────────────────┘
                       ▼
              ┌─────────────────────┐
              │         END         │
              └─────────────────────┘
```

# FIG. 24

V11

V12

tun θ

Lk+1

Lk

Lk-1

32-(k+1)

32-k

32-(k-1)

EP 3 952 305 A1

# FIG. 25

P101   P102   P103   P104   P105

P121   P122   P123   P124   P125

tun θ

# FIG. 26

START
DISPLAY PROCESSING

SET UNPROCESSED PROJECTION UNIT AS PROJECTION UNIT TO BE PROCESSED, AND ACQUIRE AMOUNT OF BLURRING CAUSED BY CROSSTALK OF PROJECTION UNIT TO BE PROCESSED — S31

ACQUIRE AMOUNT OF BLURRING CAUSED BY MTF OF PROJECTION UNIT TO BE PROCESSED — S32

IS THERE UNPROCESSED PROJECTION UNIT? — S33

NO

YES

SET INVERSE FUNCTIONS (INVERSE FILTERS) INCLUDING OPTIMIZATION OF DISTRIBUTION OF PIXELS — S34

GENERATE MULTI-VIEWPOINT IMAGES AND CORRECT MULTI-VIEWPOINT IMAGES BY USING INVERSE FUNCTIONS (INVERSE FILTERS) — S35

HAS ERROR OCCURRED? — S36

NO

YES

GENERATE IMAGE BY LINEAR INTERPOLATION — S37

PROJECT MULTI-VIEWPOINT IMAGES IN SUPERIMPOSED MANNER — S38

END

*FIG. 27*

Pa

Pb

Pc

Pd

# FIG. 28

*FIG. 29*

## INTERNATIONAL SEARCH REPORT

| International application No. |
|---|
| PCT/JP2020/011584 |

**A. CLASSIFICATION OF SUBJECT MATTER**
Int. Cl. H04N13/125(2018.01)i, G02B30/26(2020.01)i, H04N13/351(2018.01)i, H04N13/363(2018.01)i
FI: H04N13/125, G02B30/26, H04N13/363, H04N13/351
According to International Patent Classification (IPC) or to both national classification and IPC

**B. FIELDS SEARCHED**

Minimum documentation searched (classification system followed by classification symbols)
Int. Cl. H04N13/00, G02B30/00, H04N9/31, H04N5/74, G03B21/00, G09G3/00-5/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2003-533732 A (BALOGH, Tibor) 11 November 2003, paragraphs [0040], [0047], [0066], [0075], [0091], fig. 3-7, 21, 30 | 1-14 |
| A | JP 3180075 U (BALOGH, Tibor) 14 November 2012, paragraphs [0020], [0028], [0032], [0058]-[0071], fig. 3-6 | 1-14 |
| A | JP 2009-251098 A (MITSUBISHI ELECTRIC CORP.) 29 October 2009, paragraphs [0015], [0021], [0022], [0024], [0032], fig. 3 | 1-14 |
| A | JP 2008-131099 A (RICOH CO., LTD.) 05 June 2008, paragraph [0026] | 1-14 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 29.05.2020 | 09.06.2020 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

# EP 3 952 305 A1

## INTERNATIONAL SEARCH REPORT
Information on patent family members

International application No.

PCT/JP2020/011584

| Patent Documents referred to in the Report | Publication Date | Patent Family | Publication Date |
|---|---|---|---|
| JP 2003-533732 A | 11.11.2003 | US 2003/0156077 A1 paragraphs [0114], [0127], [0143], [0153], [0172], fig. 3-7, 21, 30<br>WO 2001/088598 A2<br>EP 1285304 A2<br>CN 1430734 A | |
| JP 3180075 U | 14.11.2012 | US 2012/0127320 A1 paragraphs [0035], [0043], [0047], [0094]-[0109], fig. 3-6<br>WO 2011/012913 A1<br>CN 102726050 A | |
| JP 2009-251098 A | 29.10.2009 | (Family: none) | |
| JP 2008-131099 A | 05.06.2008 | US 2008/0117387 A1 paragraph [0046] | |

Form PCT/ISA/210 (patent family annex) (January 2015)

**EP 3 952 305 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010245844 A
- JP 2013219643 A
- JP 2009008974 A